(19) Europäisches Patentamt
European Patent Office
Office européen des brevets

(11) Numéro de publication: **0 039 840**
**B1**

(12) **FASCICULE DE BREVET EUROPEEN**

(45) Date de publication du fascicule du brevet: **19.10.83**

(51) Int. Cl.³: **H 01 M 6/14**

(21) Numéro de dépôt: **81103248.1**

(22) Date de dépôt: **30.04.81**

(54) **Electrolyte pour générateur électrochimique lithium-chlorure de thionyle, procédé de préparation dudit électrolyte et générateur comportant ledit électrolyte.**

(30) Priorité: **07.05.80 FR 8010170**

(43) Date de publication de la demande:
**18.11.81 Bulletin 81/46**

(45) Mention de la délivrance du brevet:
**19.10.83 Bulletin 83/42**

(84) Etats contractants désignés:
**AT BE CH DE FR GB IT LI LU NL SE**

(56) Documents cités:
**FR - A - 2 323 238**
**GB - A - 2 005 907**
**US - A - 4 093 784**
**US - A - 4 150 198**

**EXTENDED ABSTRACTS OF THE ELECTROCHEMICAL SOC., vol. 77, no. 2, octobre 1977, abrégé 15, pages, 46 et 47**
**A. N. DEY et al.: "Primary Li/SOC12 Cells V. The Effect of Electrolyte Variables on the Morphology and the Growth Rate of the Lithium Film"**

(73) Titulaire: **GIPELEC Société Anonyme dite :**
**125, rue du Président Wilson**
**F-92302 Levallois-Perret (FR)**

(72) Inventeur: **Gabano, Jean-Paul**
**11, rue des Dames des Roches**
**F-86000 Poitiers (FR)**

(74) Mandataire: **Weinmiller, Jürgen et al,**
**Zeppelinstrasse 63**
**D-8000 München 80 (DE)**

**EP 0 039 840 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Electrolyte pour générateur électrochimique lithium-chlorure de thionyle, procédé de préparation dudit électrolyte et générateur comportant ledit électrolyte

La présente invention concerne un électrolyte pour un générateur électrochimique dont la matière active négative est le lithium, et la matière active positive est le chlorure de thionyle qui constitue également le solvant de l'électrolyte, celui-ci pouvant éventuellement comporter d'autres co-solvants. Elle concerne également un procédé de préparation de cet électrolyte et un générateur le comportant.

De tels générateurs, connus notamment par le brevet français n° 2.166.015 (72 46158), ont une énergie spécifique très élevée et présentent une tension de décharge qui se situe aux environs de 3 volts, ce qui rend leur utilisation très désirable. Ils ont cependant l'inconvénient de n'atteindre leur palier de tension de décharge qu'après un certain temps dû à la nécessité de détruire la couche protectrice qui passive le lithium au contact du chlorure de thionyle.

Des efforts ont été faits pour diminuer cet inconvénient. C'est ainsi que dans le brevet français n° 2.305.863 (76 08397), il a été proposé de recouvrir la surface de lithium par une couche de polymères vinyliques qui empêchent la formation de la couche passivante. Egalement, dans une conférence prononcée à l'occasion du 27e symposium sur les sources d'électricité, tenue à Atlantic City, il a été préconisé d'ajouter à une solution de tétrachloroaluminate dans le chlorure de thionyle, une proportion de 5% d'anhydride sulfureux $SO_2$, afin de diminuer l'effet de retard à la montée en tension de piles qui employaient cette solution comme électrolyte et matière active positive.

Aucun de ces moyens ne s'est cependant révélé totalement efficace.

La présente invention a pour but d'améliorer les performances des générateurs lithium-chlorure de thionyle en réduisant le temps de montée en tension jusqu'à le rendre pratiquement négligeable.

Elle a pour objet un électrolyte pour un générateur électrochimique dont la matière active négative est constituée par du lithium, la matière active positive par du chlorure de thionyle, l'électrolyte comprenant au moins un solvant et au moins un soluté, ce solvant étant le chlorure de thionyle et ce soluté choisi dans le groupe du tétrachloroaluminate de lithium et de l'hexachloroantimoniate de lithium, caractérisé par le fait que ledit électrolyte comprend en outre un complexe choisi dans le groups de $AlCl_3$, $SO_2$ et $SbCl_5$, $SO_2$.

De cette façon, l'électrolyte comprend du chlorure d'aluminium, ou du pentachlorure d'antimoine combiné au chlorure de lithium, et du chlorure d'aluminium, ou du pentachlorure d'antimoine complexé par l'anhydride sulfureux, mais pas de chlorure de lithium en excès (ce dernier n'étant du reste pas soluble), ni d'anhydride sulfureux en excès.

Dans le document Extended Abstracts of the Electrochemical Society Vol. 77, N° 2, oct. 1977, abrégé N° 15, pages 46 et 47, on décrit un électrolyte pour un générateur similaire. Certains des électrolytes comprennent du chlorure d'aluminium $AlCl_3$, certains autres de l'anhydride sulfureux $SO_2$, mais jamais les deux à la fois.

Des proportions avantageuses des composants sont les suivantes: pour 3 moles de chlorure d'aluminium ou de pentachlorure d'antimoine, 2 moles de chlorure de lithium et 1 mole d'anhydride sulfureux.

Les piles comportant l'électrolyte ainsi obtenu présentent un retard à la montée en tension nul ou négligeable, même après des périodes prolongées de stockage ou de repos.

Il est possible d'ajouter au chlorure de thionyle un second solvant tel que le chlorure de phosphoryle ou le chlorure de sulfuryle, notamment dans le but d'avoir un second palier en fin de décharge.

L'invention a également pour objet un procédé de préparation de l'électrolyte décrit ci-dessus.

Plusieurs modes de réalisation peuvent être mis en oeuvre, qui tous donnent l'électrolyte selon l'invention.

Selon un premier mode, l'on ajoute au chlorure de thionyle, d'une part un acide de Lewis choisi dans le groupe du chlorure d'aluminium et du pentachlorure d'antimoine, d'autre part du chlorure de lithium et enfin de l'anhydride sulfureux, en quantités correspondant aux teneurs voulues dans l'électrolyte, avec des proportions moléculaires telles que ledit acide de Lewis soit en excédent sur le chlorure de lithium d'une quantité molaire égale à celle de l'anhydride sulfureux.

L'ordre d'introduction des différents réactifs peut bien entendu être différent de celui indiqué ci-dessus.

Selon un deuxième mode, l'on ajoute au chlorure de thionyle du carbonate de lithium et un acide de Lewis choisi dans le groupe du chlorure d'aluminium et du pentachlorure d'antimoine, en proportions telles que l'on ait 3 molécules dudit acide de Lewis pour une molécule de carbonate de lithium, la quantité dudit acide de Lewis correspondant à la teneur voulue dans l'électrolyte.

Selon un troisième mode, l'on ajoute au chlorure de thionyle du lithium et un acide de Lewis choisi dans le groupe du chlorure d'aluminium et du pentachlorure d'antimoine, en proportions équimoléculaires, la quantité dudit acide de Lewis correspondant à la teneur voulue dans l'électrolyte.

L'invention a également pour objet les générateurs comportant les électrolytes décrits ci-dessus et/ou réalisés selon les modes qui ont

été précisés.

L'invention sera mieux comprise à l'aide des exemples donnés ci-après et du dessin annexé dans lequel:

— la figure 1 représente à titre illustratif un mode d'exécution d'un générateur selon l'invention.

— la figure 2 représente la courbe de décharge d'un générateur selon l'invention.

Les exemples qui vont suivre se rapportent à la préparation de l'électrolyte selon l'invention.

Exemple I

On met successivement en solution dans du chlorure de thionyle les composés suivants, les quantités étant données pour 1 litre de solution

200 g (1,5 M) de chlorure d'aluminium

42,4 g (1 M) de chlorure de lithium

32 g (0,5 M) d'anhydride sulfureux.

On a donc en présence dans 1 litre de solution, 1 mole de tétrachloroaluminate de lithium $AlCl_4Li$ et 0,5 mole du complexe $AlCl_3$, $SO_2$.

Exemple II

On met successivement:

200 g (1,5 M) de chlorure d'aluminium

37 g (0,5 M) de carbonate de lithium

dans la quantité de chlorure de thionyle donnant 1 litre de solution. Les composés sont agités pendant une dizaine d'heures.

La réaction suivante se produit:

$$Li_2CO_3 + SOCl_2 + 3AlCl_3 \rightarrow 2LiAlCl_4 + AlCl_3, SO_2 + CO_2$$

Le gaz carbonique se dégage et l'on se trouve en présence d'une solution semblable à celle de l'exemple I.

Exemple III

On dissout 200 g (1,5 M) de chlorure d'aluminium dans du chlorure de thionyle, et l'on ajoute 8,3 g de lithium (1,2 M). On laisse les réactifs en présence pendant une quinzaine d'heures. Au bout de ce temps, le lithium a disparu et l'on complète à 1 litre avec du chlorure de thionyle. Il s'est produit la réaction suivante:

$$2SOCl_2 + 4Li + 5AlCl_3 \rightarrow AlCl_3, SO_2 + 4LiAlCl_4 + S$$

On remarquera que les proportions ci-dessus ne sont pas les proportions obtenues dans les exemples I et II. De plus, contrairement à ce qui se passe dans l'exemple II avec le gaz carbonique, le soufre reste en solution, ce qui peut présenter des inconvénients en fin de décharge des piles. Le procédé donne néanmoins un électrolyte qui a été essayé, ainsi que les autres et a produit des résultats analogues à ceux des deux autres exemples.

Ces solutions ont été introduites dans des piles telles que la pile représentée sur la figure 1.

Ces piles, de forme cylindrique, ont les dimensions suivantes:

Hauteur: 3,73 cm, diamètre: 1,15 cm.

Un godet 1 en acier inoxydable contient la masse du collecteur cathodique 2 à base de carbone. Elle peut être obtenue par mélange de polytétrafluoréthylène à de la suie d'acétylène à raison d'environ 15% de polytétrafluoréthylène à l'état sec. Ce mélange séché et fritté sous forme d'un anneau contre les parois du godet 1 a une porosité de l'ordre de 82%.

Un séparateur 3 en fibres de verre est interposé entre le collecteur 2 et l'électrode négative 4 en lithium. Celle-ci se compose de deux demi-cylindres, le plan de séparation passant par l'axe du cylindre. A l'intérieur des demi-cylindres est disposée une tresse métallique cylindrique 5 sur laquelle un ressort 7 exerce, par l'intermédiaire d'une entretoise 6, une action qui tend à la raccourcir et à l'élargir. De cette manière les demi-cylindres négatifs 4 sont constamment poussés vers le séparateur 3 comme il est décrit dans le document FR—A 23 88 414.

La tresse 5 sert de collecteur négatif et le courant est transmis par l'entretoise métallique 6 et le ressort 7 au couvercle 8 de la pile, qui est séparé du godet 1 par un joint isolant 9.

L'isolement du fond du godet est assuré, de manière connue en soi, par un disque de fond 10 et une coupelle de centrage 11.

La surface apparente interne du collecteur 2 est 8,57 $cm^2$. On a mis dans la pile environ 3,5 $cm^3$ de la solution de chlorure de thionyle, qui sert à la fois d'électrolyte et de matière active positive.

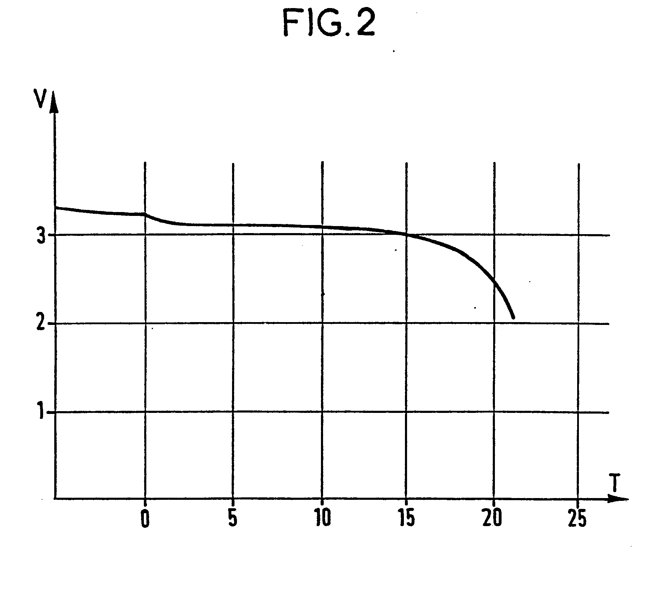

On a représenté sur la figure 2 une courbe de décharge moyenne de ces piles. La tension des piles (V) en volts a été portée en ordonnées et la durée de décharge (T) en abscisses. La première minute de décharge a été représentée avant le 0 de la courbe pour mettre en évidence, le cas échéant, un retard à la montée en tension. Le reste de la durée est compté en heures.

Une partie des piles a été déchargée 5 jours après leur fabrication, les piles étant conservées à 25°C. Une autre partie a été conservée pendant 30 jours à 70°C avant d'être déchargée. On n'a noté aucune différence entre les courbes de ces piles. Il n'y a eu aucun retard à la montée en tension dans aucun cas.

Des essais entrepris en remplaçant le chlorure d'aluminium par du pentachlorure d'antimoine molécule à molécule, ont donné des résultats analogues.

L'addition de co-solvants, chlorure de phosphoryle, ou chlorure de sulfuryle, à l'électrolyte, n'a pas changé ses propriétés.

**Revendications**

1. Electrolyte pour un générateur électrochimique dont la matière active négative est

constituée par du lithium, la matière active positive par du chlorure de thionyle, l'électrolyte comprenant au moins un solvant et au moins un soluté, ce solvant étant le chlorure de thionyle et ce soluté choisi dans le groupe du tétrachloroaluminate de lithium et de l'hexachloroantimoniate de lithium, caractérisé par le fait que ledit électrolyte comprend en outre un complexe choisi dans le groupe de $AlCl_3$, $SO_2$ et $SbCl_5$, $SO_2$.

2. Electrolyte selon la revendication 1, caractérisé par le fait que les proportions de soluté sont les suivantes: pour 3 moles de $AlCl_3$ ou $SbCl_5$ au total, 2 moles de LiCl et 1 mole de $SO_2$.

3. Electrolyte selon l'une des revendications 1 et 2, caractérisé par le fait que l'on y ajoute un co-solvant choisi dans le groupe du chlorure de sulfuryle et du chlorure de phosphoryle.

4. Procédé de préparation de l'électrolyte selon l'une des revendications 1 à 3, caractérisé par le fait que l'on ajoute au chlorure de thionyle d'une part un acide de Lewis choisi dans le groupe du chlorure d'aluminium et du pentachlorure d'antimoine, d'autre part du chlorure de lithium et enfin de l'anhydride sulfureux, en quantités correspondant aux teneurs voulues dans l'électrolyte, avec des proportions moléculaires telles que ledit acide de Lewis soit en excédent sur le chlorure de lithium d'une quantité molaire égale à celle de l'anhydride sulfureux.

5. Procédé de préparation de l'électrolyte selon l'une des revendications 1 à 3, caractérisé par le fait que l'on ajoute au chlorure de thionyle du carbonate de lithium et un acide de Lewis choisi dans le groupe du chlorure d'aluminium et du pentachlorure d'antimoine en proportions telles que l'on ait 3 molécules dudit acide de Lewis pour une molécule de carbonate de lithium, la quantité dudit acide de Lewis correspondant à la teneur voulue dans l'électrolyte.

6. Procédé de préparation de l'électrolyte selon la revendication 1, caractérisé par le fait que l'on ajoute au chlorure de thionyle du lithium et un acide de Lewis choisi dans le groupe du chlorure d'aluminium et du pentachlorure d'antimoine, en proportions équimoléculaires, la quantité dudit acide de Lewis correspondant à la teneur voulue dans l'électrolyte.

7. Générateur électrochimique dont la matière active négative (4) est constituée par du lithium, la matière active positive par du chlorure de thionyle comportant un électrolyte selon l'une des revendications 1 à 3.

8. Générateur électrochimique dont la matière active négative est constituée par du lithium, la matière active positive par du chlorure de thionyle comportant un électrolyte réalisé selon l'une des revendications 4 à 6.

## Patentansprüche

1. Elektrolyt für einen elektrochemischen Generator, dessen negatives aktives Material aus Lithium und dessen positives aktives Material aus Thionylchlorid besteht, wobei der Elektrolyt mindestens ein Lösungsmittel und mindestens einen gelösten Stoff aufweist und dieses Lösungsmittel Thionylchlorid ist und dieser gelöste Stoff aus der Gruppe ausgewählt wird, die Lithiumtetrachloraluminat und Lithiumhexachloroantimoniat enthält, dadurch gekennzeichnet, daß der Elektrolyt außerdem einen Komplex aufweist, der aus der Gruppe von $AlCl_3$, $So_2$ und $SbCl_5$, $SO_2$ ausgewählt wird.

2. Elektrolyt nach Anspruch 1, dadurch gekennzeichnet, daß die Anteile des gelösten Stoffes die folgenden sind: für 3 Mol $AlCl_3$ oder $SbCl_5$ im ganzen 2 Mol LiCl und 1 Mol $SO_2$.

3. Elektrolyt nach einem der Ansprüche 1 und 2, dadurch gekennzeichnet, daß man ein Mit-Lösungsmittel hinzufügt, das aus der Gruppe von Sulfurylchlorid und Phosphorylchlorid ausgewählt wird.

4. Verfahren zur Herstellung des Elektrolyten nach einem der Ansprüche 1 bis 3, dadurch gekennzeichnet, daß man dem Thionylchlorid einerseits eine Lewissäure, die aus der von Aluminiumchlorid und Antimon-Pentachlorid gebildeten Gruppe ausgewählt wird, und andererseits Lithiumchlorid und schließlich Schwefligsäure-Anhydrid hinzufügt, und zwar jeweils in solchen Mengen, die dem gewünschten Gehalt im Elektrolyten entsprechen, mit derartigen molekularen Anteilen, daß die Lewissäure einen Überschuß gegenüber dem Lithiumchlorid um eine Molmenge gleich der des Schwefligsäure-Anhydrids aufweist.

5. Verfahren zur Herstellung des Elektrolyten nach einem der Ansprüche 1 bis 3, dadurch gekennzeichnet, daß man dem Thionylchlorid Lithiumcarbonat und eine Lewissäure hinzufügt, die aus der von Aluminiumchlorid und Antimonpentachlorid gebildeten Gruppe in solchen Anteilen ausgewählt wird, daß man 3 Moleküle der Lewissäure für ein Molekül Lithiumcarbonat hat, wobei die Menge der Lewissäure dem gewünschten Gehalt im Elektrolyten entspricht.

6. Verfahren zur Herstellung des Elektrolyten nach Anspruch 1, dadurch gekennzeichnet, daß man dem Thionylchlorid Lithium und eine Lewissäure in äquimolekularen Anteilen hinzufügt, die aus der von Aluminiumchlorid und Antimonpentachlorid gebildeten Gruppe ausgewählt wird, wobei die Menge der Lewissäure dem gewünschten Gehalt im Elektrolyten entspricht.

7. Elektrochemischer Generator, dessen negatives aktives Material (4) aus Lithium und dessen positives aktives Material aus Thionylchlorid besteht, dadurch gekennzeichnet, daß er

einen Elektrolyten gemäß einem der Ansprüche 1 bis 3 enthält.

8. Elektrochemischer Generator, dessen negatives aktives Material aus Lithium und dessen positives aktives Material aus Thionylchlorid besteht, dadurch gekennzeichnet, daß er einen Elektrolyten gemäß einem der Ansprüche 4 bis 6 enthält.

## Claims

1. An electrolyte for an electrochemical generator whose negative active material is constituted by lithium and whose positive active material is constituted by thionyl chloride, the electrolyte containing at least one solvent and at least one solute, said solvent being thionyl chloride and said solute being chosen from the group which consists of lithium tetrachloroaluminate and lithium hexachloroantimonate, characterized in that said electrolyte further includes a complex chosen from the group which consists of $AlCl_3$, $SO_2$ and $SbCl_5$, $SO_2$.

2. An electrolyte according to claim 1, characterized in that the proportions of solute are as follows: for 3 moles of $AlCl_3$ or of $SbCl_5$ in all, 2 moles of LiCl and 1 mole of $SO_2$.

3. An electrolyte according to one of the claims 1 and 2, characterized in that a co-solvent is added, said co-solvent being chosen from the group which consists of sulfuryl chloride and phosphoryl chloride.

4. A method of preparing the electrolyte according to one of the claims 1 to 3, characterized in that firstly a Lewis acid chosen from the group which consists of aluminium chloride and antimony pentachloride, secondly lithium chloride and lastly sulphur dioxide are added to the thionyl chloride in quantities which correspond to the contents required in the electrolyte, the molecular proportions being such that there is an excess of said Lewis acid relative to the lithium chloride by a molar quantity equal to that of the sulphur dioxide.

5. A method of preparing the electrolyte according to one of the claims 1 to 3, characterized in that lithium carbonate and a Lewis acid chosen from the group which includes aluminium chloride and antimony pentachloride are added to the thionyl chloride in proportions such that there are 3 molecules of said Lewis acid per molecule of lithium carbonate, the quantity of said Lewis acid corresponding to the contents required in the electrolyte.

6. A method of preparing the electrolyte according to claim 1, characterized in that lithium and a Lewis acid chosen from the group which consists of aluminium chloride and antimony pentachloride are added to the thionyl chloride in equimolecular proportions, the quantity of said Lewis acid corresponding to the contents required in the electrolyte.

7. An electrochemical generator whose negative active material (4) is constituted by lithium, the positive active material being constituted by thionyl chloride, including an electrolyte according to any one of claims 1 or 3.

8. An electrochemical generator whose negative active material is constituted by lithium, the positive active material being constituted by thionyl chloride, including an electrolyte produced according to any one of claims 4 to 6.

FIG.1

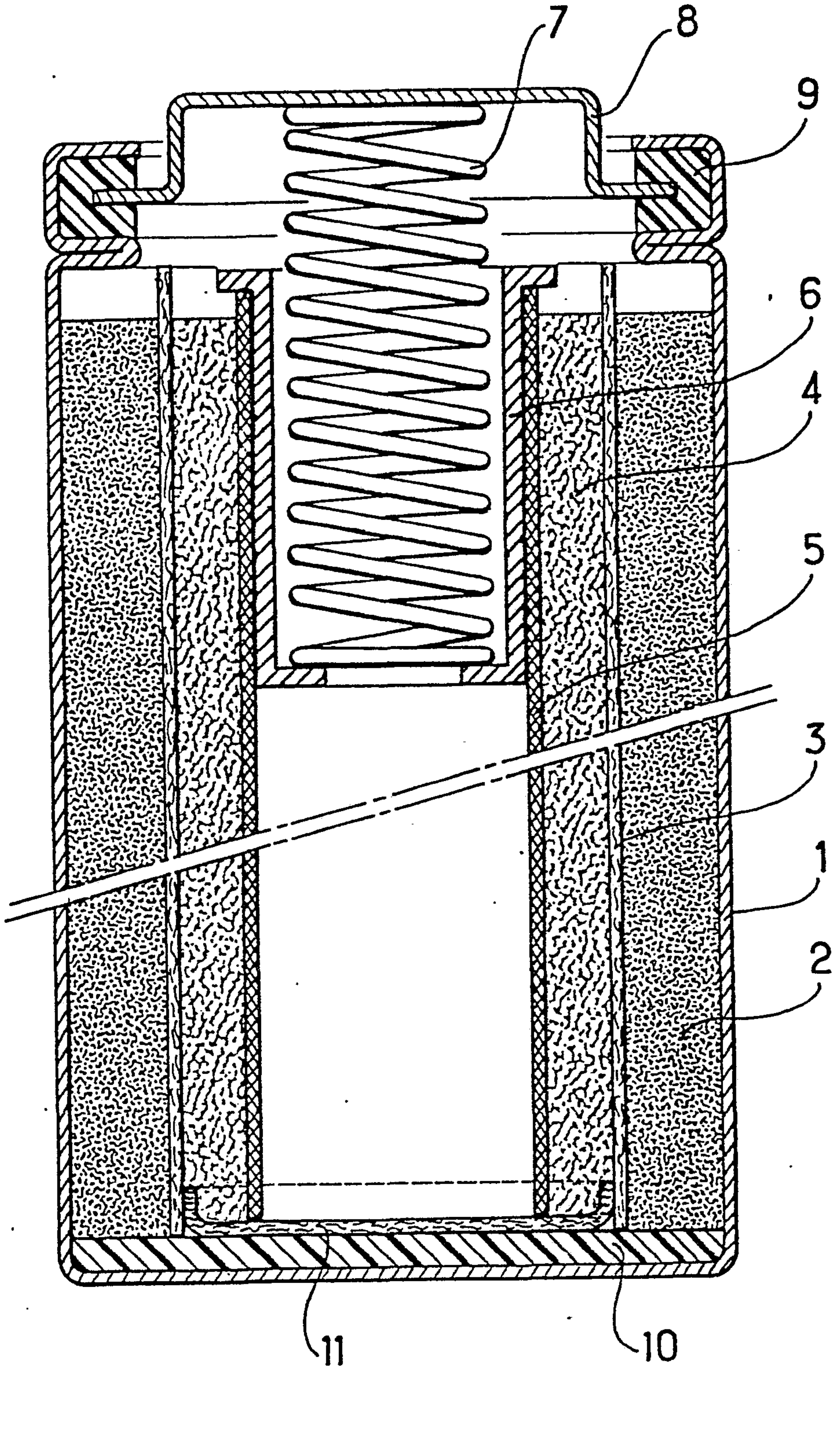

FIG. 2